# EUROPEAN PATENT APPLICATION

(11) **EP 3 613 536 A1**
(43) Date of publication of application: **26.02.2020**
(21) Application number: 19193304.3
(22) Date of filing: 23.08.2019
(51) Int. Cl.: B23Q 11/00, B23Q 11/08, B23Q 11/10

(54) **CUTTING APPARATUS**

(30) Priority: 24.08.2018 JP 2018157618
(71) Applicant: DGSHAPE Corporation, Hamamatsu-shi, Shizuoka 431-2103 (JP)
(72) Inventor: MOCHIZUKI, Ryusuke, Hamamatsu-shi, Shizuoka 431-2103 (JP)
(74) Representative: Grünecker Patent- und Rechtsanwälte PartG mbB

(57) **Abstract**

A cutting apparatus 10 includes a case 11, a liquid discharger 36, a storage tank 37, and a blower 70. The case 11 is provided with a machining space 19, a housing space A2, a communication port 27H through which the machining space 19 is in communication with the housing space A2, and exhaust ports 25E through which the housing space A2 is in communication with an external space. The liquid discharger 36 discharges a coolant into the machining space 19. The storage tank 37 is disposed in the housing space A2. The storage tank 37 collects the coolant discharged from the liquid discharger 36 and passed through the communication port 27H. The blower 70 includes outlets 74O and 75O. The blower 70 blows air from the outlets 74O and 75O such that the air flows from inside the case 11 to the exhaust ports 25E.

## Description

### BACKGROUND OF THE INVENTION

### 1. Field of the Invention

The present invention relates to cutting apparatuses.

### 2. Description of the Related Art

Cutting apparatuses known in the related art cut ceramic or resin workpieces into desired shapes. Such a cutting apparatus includes, for example, a case, a retainer, a gripper, and a controller. A machining space is defined in the case. The retainer is disposed in the machining space and retains a workpiece. The gripper is disposed in the machining space and grips a machining tool to carry out machining (e.g., cutting and/or grinding) on the workpiece. The controller is communicably connected to the retainer and the gripper.

During cutting, friction occurs between the workpiece and the machining tool. An increase in frictional force resulting from the friction may require a greater cutting force during cutting. Heat caused by the friction may deform the workpiece or may promote wearing away of the machining tool. To solve these problems, JP 2016-135519 A, for example, discloses a "wet type" cutting apparatus that includes a liquid discharger and a storage tank in addition to the above-described components of the cutting apparatus known in the related art. The liquid discharger discharges a cutting liquid (e.g., a coolant) onto the machining tool and the workpiece so as to reduce friction between the machining tool and the workpiece and cool the machining tool and the workpiece. The storage tank is disposed in a housing space located below the machining space. The storage tank stores the coolant.

### SUMMARY OF THE INVENTION

The cutting apparatus disclosed in JP 2016-135519 A is configured such that the coolant used during cutting is collected into the storage tank through a drainage port (which is defined on the bottom of the machining space) and then reused for cutting. Such a configuration, however, causes moisture-containing air in the machining space to intrude into the housing space through the drainage port. Such a configuration may also cause the coolant to evaporate from the storage tank so as to increase the humidity of the housing space. Carrying out cutting for a long period of time, in particular, may cause the controller to generate heat. If the heat is trapped inside the cutting apparatus, the housing space is likely to be high in temperature and humidity. This may result in a difference between the temperature inside the housing space and outside air temperature, forming condensation in the housing space. Condensate resulting from this condensation may unfortunately wet the inside of the housing space and/or an area adjacent to the cutting apparatus (e.g., a floor).

Accordingly, embodiments of the present invention provide a cutting apparatus that is unlikely to form condensation in a housing space in which a storage tank is housed.

A cutting apparatus according to a preferred embodiment of the present invention includes a case, a retainer, a gripper, a liquid discharger, a storage tank, and a blower. The case is provided with a machining space, a housing space, a communication port through which the machining space is in communication with the housing space, and an exhaust port through which the housing space is in communication with an external space. The retainer is disposed in the machining space. The retainer retains a workpiece. The gripper is disposed in the machining space. The gripper grips a machining tool to cut the workpiece. The liquid discharger discharges a coolant into the machining space. The storage tank is disposed in the housing space. The storage tank collects the coolant discharged from the liquid discharger and passed through the communication port. The blower includes at least one of a first outlet and a second outlet. The blower blows air from the at least one of the first and second outlets such that the air flows from inside the case to the exhaust port.

The case of the cutting apparatus is provided with the exhaust port through which the housing space is in communication with the external space. The blower generates an air current flowing to the exhaust port. Such an air current increases air permeability of the housing space. This makes it difficult for moisture-containing air to stagnate in the housing space and thus prevents or reduces formation of condensation. Accordingly, the present embodiment makes it unlikely that the inside of the housing space and an area adjacent to the cutting apparatus will be wetted by condensate. Consequently, the present embodiment saves the time and trouble of cleaning.

Various embodiments of the present invention provide a cutting apparatus that is unlikely to form condensation in a housing space in which a storage tank is housed.

### BRIEF DESCRIPTION OF THE DRAWINGS

FIG. 1 is a perspective view of a cutting apparatus according to an embodiment of the present invention.
FIG. 2 is a front view of the cutting apparatus illustrated in FIG. 1, with its front upper cover opened.
FIG. 3 is a cross-sectional view of the cutting apparatus illustrated in FIG. 1, with its front upper cover closed.
FIG. 4 is a perspective view of a workpiece attached to a holder according to the embodiment of the present invention.
FIG. 5 is a perspective view of the lower end of a spindle according to the embodiment of the present invention.
FIG. 6 is a perspective view of a tool magazine and a clamp according to the embodiment of the present invention.
FIG. 7 is a front view of the tool magazine and the clamp according to the embodiment of the present invention.
FIG. 8 is a front view of a second housing space according to the embodiment of the present invention.
FIG. 9 is a bottom view of the cutting apparatus illustrated in FIG. 1, with its front lower cover closed.
FIG. 10 is a block diagram of a blower according to the embodiment of the present invention.

### DETAILED DESCRIPTION OF THE PREFERRED EMBODIMENTS

Cutting apparatuses according to embodiments of the present invention will be described below with reference to the drawings. The embodiments described below are naturally not intended to limit the present invention in any way. Components or elements having the same functions are identified by the same reference signs, and description thereof will be simplified or omitted when deemed redundant.

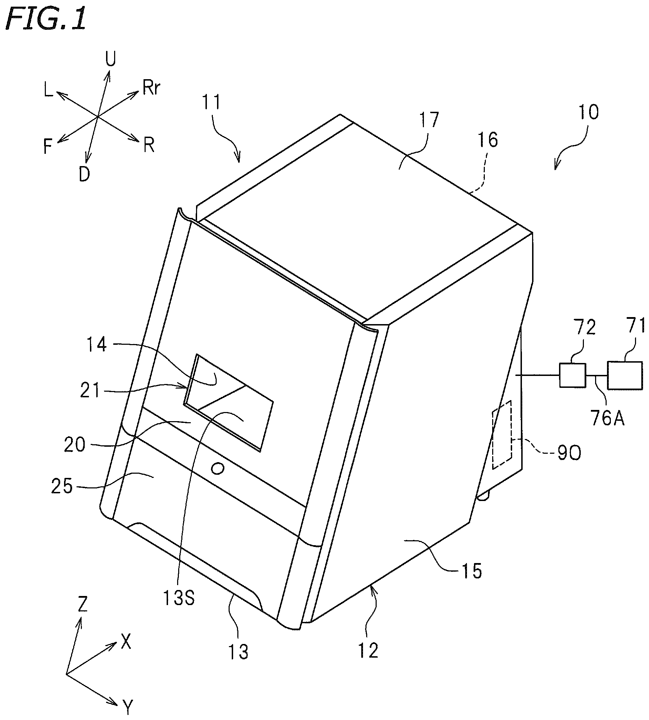

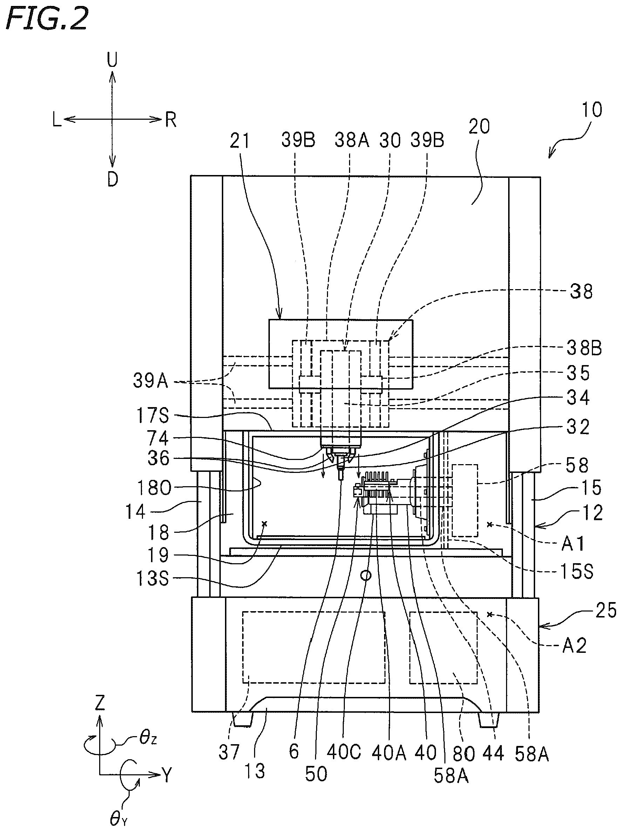

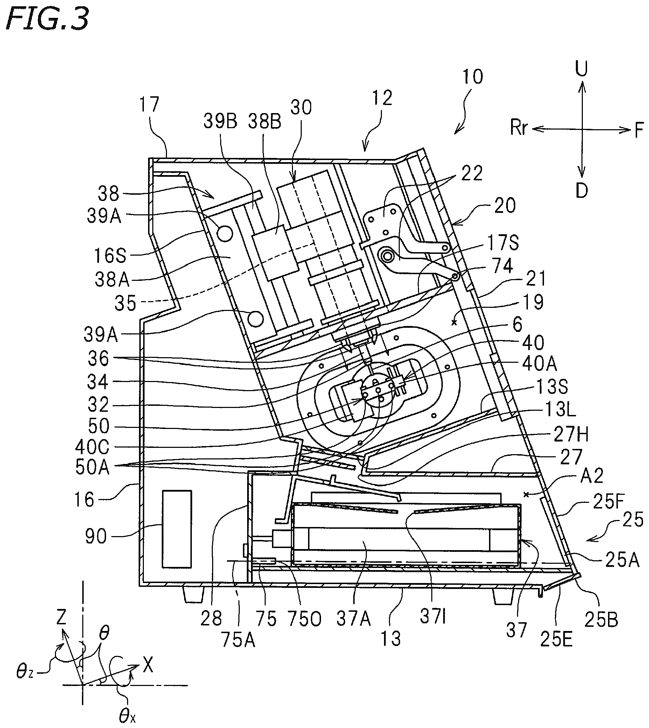

FIG. 1 is a perspective view of a cutting apparatus 10. FIG. 2 is a front view of the cutting apparatus 10, with its front upper cover 20 opened. FIG. 3 is a cross-sectional view of the cutting apparatus 10, with the front upper cover 20 closed. The following description is based on the assumption that when a user faces the front of the cutting apparatus 10, a direction from the rear of the cutting apparatus 10 toward the user is a forward direction and a direction from the user toward the rear of the cutting apparatus 10 is a rearward direction. The terms "right", "left", "up", and "down" respectively refer to right, left, up, and down with respect to the user facing the front of the cutting apparatus 10. The reference signs F, Rr, R, L, U, and D in the drawings respectively represent front, rear, right, left, up, and down.

The cutting apparatus 10 is disposed on a coordinate system including an X axis, a Y axis, and a Z axis perpendicular to each other (which will hereinafter be referred to as an "X, Y, and Z orthogonal coordinate system"). The X axis extends substantially in a front-rear direction. As illustrated in FIG. 3, the X axis is inclined relative to a horizontal direction by an angle θ in the present embodiment. Alternatively, the X axis may extend in the horizontal direction. The Y axis extends in a right-left direction. The Z axis extends substantially in an up-down direction. As illustrated in FIG. 3, the Z axis is inclined relative to a vertical direction by the angle θ in the present embodiment. Alternatively, the Z axis may extend in the vertical direction. The reference sign θ_{X} represents a rotational direction around the X axis. The reference sign θ_{Y} represents a rotational direction around the Y axis. The reference sign θ_{Z} represents a rotational direction around the Z axis. These directions are defined merely for the sake of convenience of description and do not limit in any way how the cutting apparatus 10 may be installed. These directions do not limit the present invention in any way.

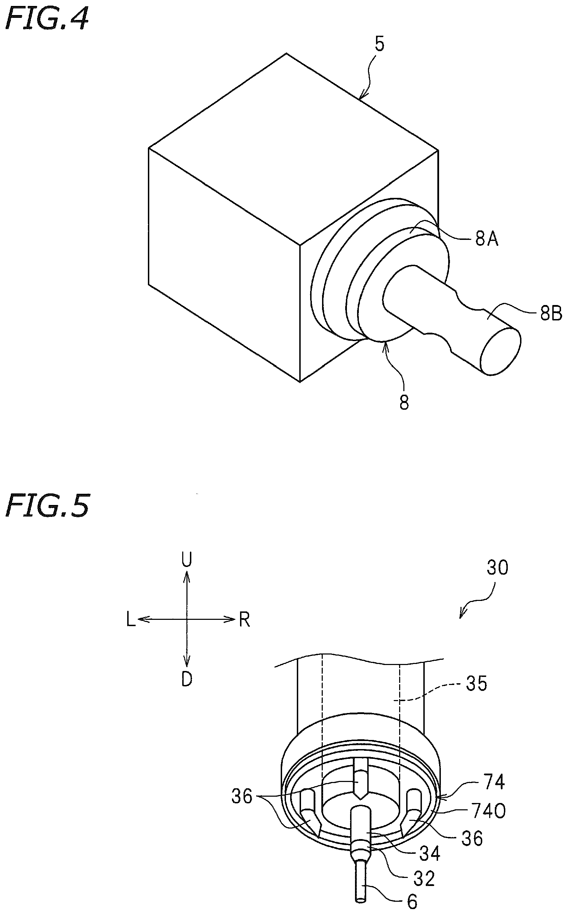

The cutting apparatus 10 cuts a workpiece 5 (see FIG. 4). The cutting apparatus 10 grinds the workpiece 5 when necessary. The cutting apparatus 10 machines the workpiece 5 so as to fabricate a molded article for dental use. Examples of such a molded article include a dental prosthetic (such as a crown, an inlay, an onlay, or a veneer), an artificial tooth, and a denture base. In the present embodiment, the workpiece 5 has a block shape (such as a cubic or cuboid shape). Alternatively, the workpiece 5 may have any other suitable shape, such as a disk shape. Examples of material(s) for the workpiece 5 include resin materials (such as polymethyl methacrylate (PMMA) resin, polyether ether ketone (PEEK) resin, and hybrid resin), ceramic materials (such as glass ceramic and zirconia), wax, and gypsum. When zirconia is selected as a material for the workpiece 5, semi-sintered zirconia, for example, is used. The workpiece 5 is not limited to any particular shape or material.

As illustrated in FIG. 4, the workpiece 5 is attached to a holder 8 (which may also be referred to as an "adapter") in the present embodiment. The workpiece 5 attached to the holder 8 is held in the cutting apparatus 10. The workpiece 5 retained by the holder 8 is subjected to cutting. In the present embodiment, the holder 8 is integrally molded with the workpiece 5. The holder 8 includes a plate 8A and a connecting pin 8B. The plate 8A and the connecting pin 8B are integral with each other. The connecting pin 8B protrudes from the plate 8A. The connecting pin 8B is inserted into an insertion hole 50A defined in a clamp 50 (which will be described below).

The cutting apparatus 10 is configured such that a coolant is usable during cutting. The cutting apparatus 10 is a "wet type" cutting apparatus. As used herein, the term "coolant" may refer to a water-soluble coolant or a water-insoluble coolant. The term "coolant" may refer to water or a coolant provided by adding, for example, an additive to water so as to enhance the cooling effect of the water. In one example, the coolant may consist mainly of water (which is higher in mass percentage than other components) and contain a water-insoluble component (such as mineral oil or grease) and a surfactant.

As illustrated in FIGS. 1 to 3, the cutting apparatus 10 has a box shape. The cutting apparatus 10 includes a case 11. The case 11 includes a case body 12, the front upper cover 20, and a front lower cover 25 (which will be described below). The front surface of the case 11 extends along the Z axis. The front surface of the case 11 is inclined by the angle θ relative to the vertical direction. In one example, the angle θ is in the range of 5 degrees to 60 degrees. Alternatively, the angle θ may be zero degrees. The case body 12 is a casing of the cutting apparatus 10. The case body 12 is hollow. The case body 12 includes a bottom wall 13, a left wall 14, a right wall 15, a rear wall 16, an upper wall 17, a front wall 18, a first bottom partition 13S, a right partition 15S, a first rear partition 16S, an upper partition 17S, a second bottom partition 27, and a second rear partition 28. The left wall 14 extends upward from the left end of the bottom wall 13. The right wall 15 extends upward from the right end of the bottom wall 13. The rear wall 16 extends upward from the rear end of the bottom wall 13. The left end of the rear wall 16 is connected to the rear end of the left wall 14. The right end of the rear wall 16 is connected to the rear end of the right wall 15. The front wall 18 extends upward from the front end of the first bottom partition 13S. The left end of the front wall 18 is connected to the front end of the left wall 14. The right end of the front wall 18 is connected to the front end of the right wall 15. The upper end of the front wall 18 is connected to the front end of the upper wall 17. The upper wall 17 is connected to the upper ends of the left wall 14, the right wall 15, the rear wall 16, and the front wall 18.

The first bottom partition 13S is located above the bottom wall 13. The first bottom partition 13S extends from the front of the cutting apparatus 10 toward the rear of the cutting apparatus 10 such that the first bottom partition 13S is inclined gradually downward. A lid 13L is disposed behind the first bottom partition 13S. The lid 13L has a mesh structure that allows the coolant to pass therethrough in the up-down direction. The right partition 15S is disposed rightward of the left wall 14 and leftward of the right wall 15. The right partition 15S extends upward from the first bottom partition 13S. The first rear partition 16S is disposed forward of the rear wall 16 and rearward of the front wall 18. The first rear partition 16S is connected to the first bottom partition 13S, the left wall 14, the right partition 15S, and the upper partition 17S. The upper partition 17S is disposed above the first bottom partition 13S and below the upper wall 17. The upper partition 17S extends in parallel or substantially in parallel with the first bottom partition 13S.

The second bottom partition 27 is disposed below the first bottom partition 13S and above the bottom wall 13. The second bottom partition 27 extends in parallel or substantially in parallel with the bottom wall 13. The second bottom partition 27 is provided with a drainage port 27H passing through the second bottom partition 27 in the up-down direction. The drainage port 27H is constantly in an open state. The drainage port 27H is provided with no switching member (such as a valve element) that enables switching between the open state and closed state. The second rear partition 28 is disposed forward of the rear wall 16 and rearward of the front wall 18. The second rear partition 28 is disposed below the first rear partition 16S. The second rear partition 28 extends in parallel or substantially in parallel with the rear wall 16. The second rear partition 28 extends upward from the bottom wall 13. The upper end of the second rear partition 28 is connected to the second bottom partition 27.

A lateral surface of the case body 12 (which is the front wall 18 of the case body 12 in the present embodiment) is provided with an opening 180. The opening 180 is defined by the left wall 14, the first bottom partition 13S, the right partition 15S, and the upper partition 17S. The upper space of the case body 12 is divided into a right space and a left space by the right partition 15S. The left space of the case body 12 defines a machining space 19 surrounded by the left wall 14, the first bottom partition 13S, the right partition 15S, the upper partition 17S, the first rear partition 16S, and the front upper cover 20. The machining space 19 is a space where the workpiece 5 is to be cut. The right space of the case body 12 defines a first housing space A1 surrounded by the right partition 15S, the first bottom partition 13S, the right wall 15, the upper partition 17S, the first rear partition 16S, and the front wall 18. A second housing space A2 is defined in the lower portion of the cutting apparatus 10. The second housing space A2 is surrounded by the left wall 14, the bottom wall 13, the right wall 15, the second bottom partition 27, the second rear partition 28, and the front lower cover 25. The second housing space A2 is in constant communication with the machining space 19 through the drainage port 27H defined in the second bottom partition 27. The drainage port 27H is an example of a communication port through which the machining space 19 is in communication with the second housing space A2.

The front upper cover 20 defines the upper portion of the front surface of the case 11. The front upper cover 20 is supported by support arms 22. An end of each support arm 22 is attached to the case body 12. The front upper cover 20 moves in the up-down direction, with each support arm 22 being rotated around its pivot (not illustrated), so as to cover and uncover the opening 180. This enables switching between an open state where the opening 180 of the case body 12 is uncovered by the front upper cover 20 and a closed state where the opening 180 of the case body 12 is covered by the front upper cover 20. The user moves the front upper cover 20 upward so as to uncover the opening 180 in, for example, placing the workpiece 5 in the cutting apparatus 10, removing the workpiece 5 from the cutting apparatus 10, or performing maintenance of the cutting apparatus 10. Uncovering the opening 180 brings the machining space 19 into communication with an external space. The user moves the front upper cover 20 downward so as to cover the opening 180 in carrying out cutting. Covering the opening 180 brings the machining space 19 out of communication with the external space. In the present embodiment, the front upper cover 20 is manually movable by the user. Alternatively, a motor, for example, may be connected to the support arms 22, and the motor may be driven so as to automatically move the front upper cover 20 in the up-down direction.

The front upper cover 20 is provided with a window 21. The window 21 is smaller than the opening 180 of the case body 12 when viewed along the X axis. The window 21 is made of, for example, a transparent acrylic plate or glass plate. The user would be able to visually check the machining space 19 through the window 21 if the opening 180 is covered by the front upper cover 20 (e.g., during cutting). Because the window 21 is optional, the front upper cover 20 does not necessarily have to be provided with the window 21.

The cutting apparatus 10 includes a carriage 38, a tool magazine 40, the clamp 50, a conveyor 58, a storage tank 37, a blower 70, and a controller 90. The carriage 38 is disposed above the machining space 19. The carriage 38 is equipped with a spindle 30, liquid discharge nozzles 36, and a first air nozzle 74 (which will be described below). The spindle 30 passes through the upper partition 17S. The tool magazine 40 and the clamp 50 are disposed in the machining space 19. The conveyor 58 is disposed in the first housing space A1. The storage tank 37 is disposed in the second housing space A2.

The carriage 38 is movable in a Z-axis direction and a Y-axis direction. As used herein, the term "Z-axis direction" refers to a direction extending along the Z axis, and the term "Y-axis direction" refers to a direction extending along the Y axis. The carriage 38 includes a first carriage 38A and a second carriage 38B. The first carriage 38A is supported by a pair of first guide shafts 39A extending in the Y-axis direction. The first carriage 38A is movable in the Y-axis direction along the first guide shafts 39A by a first driver (not illustrated). The left ends of the first guide shafts 39A are connected to the left wall 14. The right ends of the first guide shafts 39A pass through the right partition 15S and are connected to the right wall 15. The second carriage 38B is supported by a pair of second guide shafts 39B extending in the Z-axis direction. The second carriage 38B is movable in the Z-axis direction along the second guide shafts 39B by a second driver (not illustrated). The second guide shafts 39B are provided on the first carriage 38A. Thus, moving the first carriage 38A in the Y-axis direction moves the second carriage 38B in the Y-axis direction accordingly. The first driver and the second driver are electrically connected to the controller 90 and controlled by the controller 90.

The spindle 30 is provided on the second carriage 38B. The spindle 30 moves on the X, Y, and Z orthogonal coordinate system in accordance with the movement of the carriage 38. More specifically, the spindle 30 moves in the Z-axis direction in accordance with the movement of the second carriage 38B and moves in the Y-axis direction in accordance with the movement of the first carriage 38A.

FIG. 5 is a perspective view of the lower end of the spindle 30. The spindle 30 supports a machining tool 6 such that the machining tool 6 is rotatable. The machining tool 6 may be a milling bar. The spindle 30 cuts the workpiece 5 by rotating the machining tool 6. The spindle 30 includes a gripper 32, a rotator 34, and a seal 35. In one example, the gripper 32 may be a collet chuck. The seal 35 has a cylindrical shape. The seal 35 extends in the up-down direction. The lower end of the seal 35 is provided with the rotator 34. The rotator 34 rotates relative to the seal 35.

The lower end of the rotator 34 is provided with the gripper 32. The gripper 32 rotates together with the rotator 34. The gripper 32 supports (or grips) the upper end of the machining tool 6. Although not illustrated, the gripper 32 includes a plurality of supports arranged on an X-Y plane in the present embodiment. The gripper 32 supports the machining tool 6 by holding the upper end of the machining tool 6 between the supports. The rotator 34 rotates the machining tool 6 supported by the gripper 32. The rotator 34 is connected with a first motor (not illustrated). The first motor is electrically connected to the controller 90 and controlled by the controller 90. Driving the first motor rotates the rotator 34 in the rotational direction θ_{Z} around the Z axis. In accordance with the rotation of the rotator 34, the machining tool 6 gripped by the gripper 32 rotates in the rotational direction θ_{Z} around the Z axis.

The liquid discharge nozzles 36 are disposed laterally of the spindle 30. Similarly to the spindle 30, the liquid discharge nozzles 36 move on the X, Y, and Z orthogonal coordinate system in accordance with the movement of the carriage 38. In the present embodiment, the number of liquid discharge nozzles 36 is four in total such that one of the liquid discharge nozzles 36 is disposed in front of the spindle 30, another one of the liquid discharge nozzles 36 is disposed behind the spindle 30, still another one of the liquid discharge nozzles 36 is disposed rightward of the spindle 30, and yet another one of the liquid discharge nozzles 36 is disposed leftward of the spindle 30. The liquid discharge nozzles 36 may be disposed at any other suitable locations. The carriage 38 may be provided with any other number of liquid discharge nozzles 36. The outlets of the liquid discharge nozzles 36 are disposed above the clamp 50 and the machining tool 6. The liquid discharge nozzles 36 discharge the coolant into the machining space 19 while the workpiece 5 is machined with the machining tool 6. The liquid discharge nozzles 36 typically discharge the coolant onto the machining tool 6 and/or the workpiece 5. Each of the liquid discharge nozzles 36 is an example of a liquid discharger. The liquid discharge nozzles 36 are connected to the storage tank 37 through a liquid supply passage (not illustrated). The liquid supply passage may be made of any suitable material and may have any suitable shape and size. In one example, the liquid supply passage is an easily deformable resin tube.

The conveyor 58 moves the tool magazine 40 in an X-axis direction. As used herein, the term "X-axis direction" refers to a direction extending along the X axis. The conveyor 58 is disposed rightward of the tool magazine 40. The conveyor 58 includes a shaft 58A extending in the Y-axis direction. The shaft 58A passes through the right partition 15S. A portion of the shaft 58A (e.g., the right portion of the shaft 58A) is disposed in the first housing space A1. Another portion of the shaft 58A (e.g., the left portion of the shaft 58A) is disposed in the machining space 19. The left end of the shaft 58A is provided with the clamp 50 and the tool magazine 40. The conveyor 58 is movable in the X-axis direction by a third driver (not illustrated). The third driver is electrically connected to the controller 90 and controlled by the controller 90.

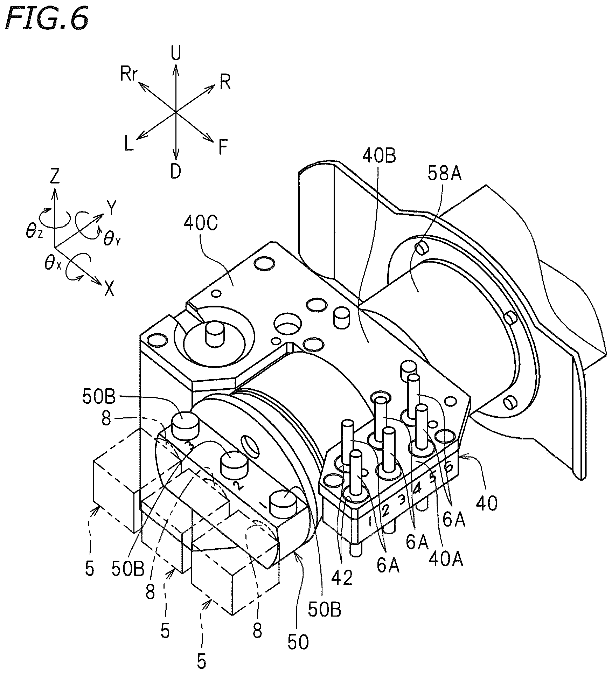

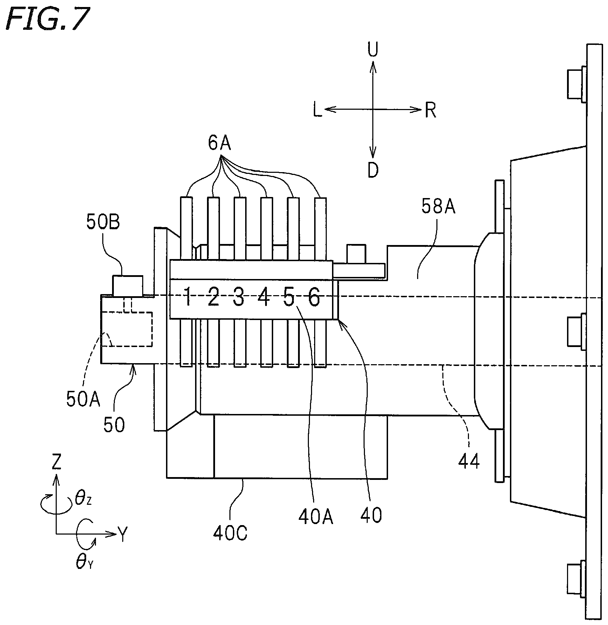

FIG. 6 is a perspective view of the tool magazine 40 and the clamp 50. FIG. 7 is a front view of the tool magazine 40 and the clamp 50. The tool magazine 40 is able to hold a plurality of the machining tools 6. The tool magazine 40 is provided between the clamp 50 and the conveyor 58. Moving the conveyor 58 in the X-axis direction moves the tool magazine 40 in the X-axis direction. The tool magazine 40 includes a first portion 40A, a second portion 40B, and a third portion 40C. The first portion 40A holds the machining tools 6. The second portion 40B is located rearward of the first portion 40A. The second portion 40B is connected to the shaft 58A. The third portion 40C is located rearward of the second portion 40B. The first portion 40A of the tool magazine 40 is provided with a plurality of holes 42 in which the machining tools 6 are to be held. In the present embodiment, the number of holes 42 is six. The holes 42 pass through the first portion 40A of the tool magazine 40 in the up-down direction. Each machining tool 6 is inserted into an associated one of the holes 42 such that the upper portion of each machining tool 6 is exposed. Replacement of the machining tool 6 involves: returning the machining tool 6 gripped by the gripper 32 of the spindle 30 to the associated hole 42; moving the spindle 30 to a position over the machining tool 6 to be used next; and causing the gripper 32 to grip the upper end of the machining tool 6 located under the gripper 32.

The shaft 58A is internally provided with a rotation shaft 44. The rotation shaft 44 supports the clamp 50 such that the clamp 50 is rotatable. The rotation shaft 44 extends in the right-left direction. The rotation shaft 44 is coupled to the clamp 50 and the conveyor 58. A second motor (not illustrated) is provided for the rotation shaft 44. The second motor is electrically connected to the controller 90 and controlled by the controller 90. The rotation shaft 44 is rotatable in the rotational direction θ_{Y} around the Y axis by the second motor. The rotation of the rotation shaft 44 in the rotational direction θ_{Y} around the Y axis causes the clamp 50 to rotate in the rotational direction θ_{Y} around the Y axis. The rotation shaft 44 is rotatable independently of the shaft 58A. The rotation of the rotation shaft 44 in the rotational direction θ_{Y} around the Y axis thus does not cause the shaft 58A to rotate in the rotational direction θ_{Y} around the Y axis.

The clamp 50 retains the holder 8 such that the holder 8 is detachable from the clamp 50. As illustrated in FIG. 6, the number of holders 8 retainable by the clamp 50 is three in the present embodiment. In the present embodiment, the clamp 50 retains the workpiece(s) 5 through the holder(s) 8. Alternatively, the clamp 50 may be configured to directly retain the workpiece(s) 5. The clamp 50 is provided with a plurality of the insertion holes 50A. In the present embodiment, the number of insertion holes 50A is three, and the three insertion holes 50A are aligned in the front-rear direction. The connecting pins 8B of the holders 8 are each inserted into an associated one of the insertion holes 50A. The connecting pins 8B inserted into the insertion holes 50A are secured to the clamp 50 with screws 50B. The clamp 50 is movable together with the tool magazine 40. The tool magazine 40 and the clamp 50 are movable in the X-axis direction by the conveyor 58. The rotation of the clamp 50 in the rotational direction θ_{Y} around the Y axis does not cause the tool magazine 40 to rotate in the rotational direction θ_{Y} around the Y axis. The clamp 50 is an example of a retainer. In the present embodiment, the cutting apparatus 10 cuts the workpiece(s) 5 retained by the clamp 50 through the holder(s) 8.

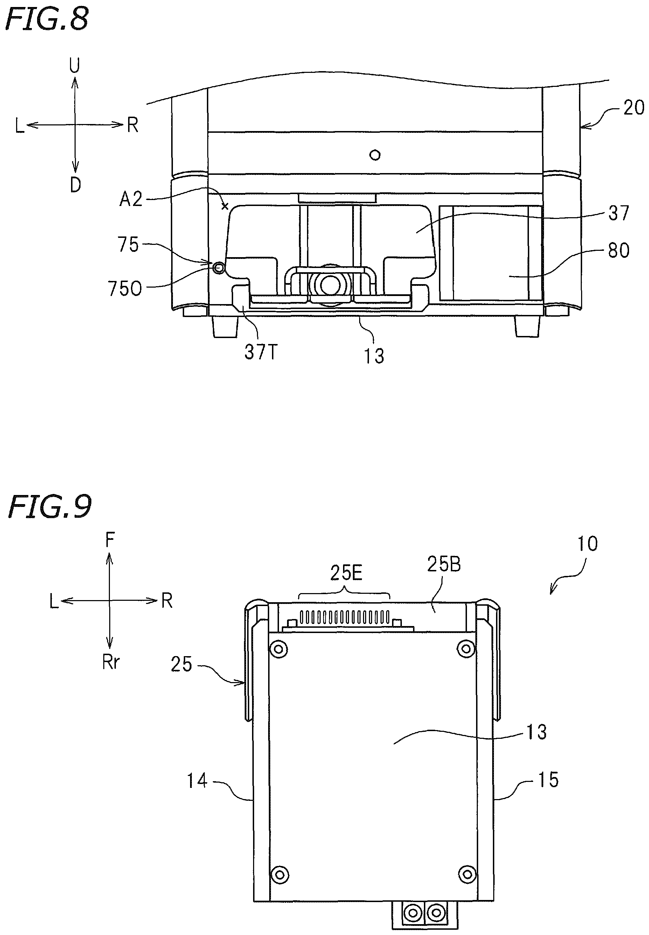

FIG. 8 is a front view of the second housing space A2. FIG. 8 illustrates the second housing space A2, with the front lower cover 25 detached from the cutting apparatus 10. The second housing space A2 is disposed below the machining space 19. The storage tank 37, a housing case 80, and a second air nozzle 75 (which will be described below) are disposed in the second housing space A2. The storage tank 37 is detachably disposed in the left portion of the second housing space A2. The storage tank 37 is placed on a tray 37T. The tray 37T is slidable in the front-rear direction along a support (not illustrated) attached to the bottom wall 13. A water-absorbing mat (not illustrated) is put on the upper surface of the tray 37T (i.e., a surface of the tray 37T on which the storage tank 37 is placed). The housing case 80 is disposed in the right portion of the second housing space A2. The housing case 80 houses tools to be used to perform, for example, positional correction for the cutting apparatus 10 and maintenance of the cutting apparatus 10. Examples of such tools include a jig for positional correction, a screwdriver, a wrench, and a maintenance kit for the spindle 30.

The storage tank 37 is hollow. The storage tank 37 is a container to collect the coolant discharged from the liquid discharge nozzles 36. In the present embodiment, the storage tank 37 also serves as a container to store the coolant to be used for cutting. In the present embodiment, the storage tank 37 has a flat cuboid shape. The storage tank 37, however, is not limited to any particular shape. The storage tank 37 may have, for example, a cylindrical shape, a cubic shape, or a bag shape. The storage tank 37 includes a collection port 37I that passes through the upper portion of the storage tank 37 in the up-down direction. The collection port 37I is located below the drainage port 27H. The coolant discharged from the liquid discharge nozzles 36 flows through the drainage port 27H defined in the second bottom partition 27 and then returns to the storage tank 37 through the collection port 37I.

A filter 37A is detachably disposed in the storage tank 37. The filter 37A is disposed between the collection port 37I and a supply port (not illustrated) in communication with the liquid supply passage. The filter 37A filters the coolant collected into the storage tank 37. The coolant filtered is delivered to the liquid supply passage through the supply port and then reused for cutting. In the present embodiment, the storage tank 37 is configured such that the coolant collected is re-delivered to the liquid supply passage. Alternatively, the storage tank 37 may be configured such that the coolant collected undergoes, for example, disposal without being delivered to the liquid supply passage. In such a case, the storage tank 37 may include no filter 37A.

As illustrated in FIGS. 1 to 3, the front lower cover 25 covers the front of the second housing space A2. The front lower cover 25 is approximately L-shaped when viewed in cross section. The front lower cover 25 defines the lower portion of the front surface of the case 11 and the front portion of the bottom surface of the case 11. The front lower cover 25 includes a front surface 25F and a bottom surface 25B extending from the front surface 25F. The angle formed between the front surface 25F and the bottom surface 25B of the front lower cover 25 corresponds to the angle θ.

The front lower cover 25 is slidable in the front-rear direction along a support (not illustrated) attached to the left wall 14 and the right wall 15. The movement of the front lower cover 25 in the front-rear direction enables switching between an open state where the second housing space A2 is uncovered by the front lower cover 25 and a closed state where the second housing space A2 is covered by the front lower cover 25. The user slides the front lower cover 25 forward in attaching or detaching the storage tank 37 (which stores the coolant) to or from the cutting apparatus 10 and/or removing the tool(s) from the housing case 80. The user slides the front lower cover 25 rearward in carrying out cutting. Sliding the front lower cover 25 rearward covers the second housing space A2. Covering the second housing space A2 during cutting prevents the user from removing the storage tank 37 by mistake in the course of cutting the workpiece 5. In the present embodiment, the front lower cover 25 is manually movable by the user. Alternatively, a motor, for example, may be connected to the front lower cover 25, and the motor may be driven so as to automatically move the front lower cover 25.

FIG. 9 is a bottom view of the cutting apparatus 10, with the front lower cover 25 closed. The bottom surface 25B of the front lower cover 25 is provided with exhaust ports 25E. Through the exhaust ports 25E, air inside the second housing space A2 is discharged out of the case 11. The exhaust ports 25E are disposed below the collection port 37I of the storage tank 37. The exhaust ports 25E are disposed below the lower end of the storage tank 37. In the present embodiment, each exhaust port 25E has a slit shape. The opening of each exhaust port 25E is smaller than the storage tank 37. The storage tank 37 is thus unremovable from the cutting apparatus 10 through the exhaust ports 25E although air passes through the exhaust ports 25E.

The front surface 25F of the front lower cover 25 is inclined such that the lower end of the front surface 25F is located forward of the upper end of the front surface 25F. The bottom surface 25B of the front lower cover 25 is thus inclined such that the upper end of the bottom surface 25B is located forward of the lower end of the bottom surface 25B. The front surface 25F is an example of an inclined surface. The front surface 25F is inclined toward the exhaust ports 25E of the bottom surface 25B. An air current is thus easily guidable to the exhaust ports 25E along the front surface 25F. This increases air permeability of the second housing space A2.

The rear side of the front surface 25F of the front lower cover 25 facing the second housing space A2 is provided with a moisture absorber 25A. When a space is left between the storage tank 37 and the front surface 25F of the front lower cover 25 as illustrated in FIG. 3, turbulence is likely to occur in this space and/or an air current is likely to stagnate in this space. In the present embodiment, however, the moisture absorber 25A is provided on the front surface 25F so as to more effectively reduce or prevent formation of condensation. The moisture absorber 25A absorbs moisture in air inside the second housing space A2. The moisture absorber 25A may be able to absorb and desorb moisture. The moisture absorber 25A may be, for example, a nonwoven fabric or a porous foam (such as a sponge). The moisture absorber 25A may be made of resin, such as urethane, polyethylene, or polypropylene. The moisture absorber 25A may be made of a porous inorganic material, such as carbon or clay mineral. The moisture absorber 25A may be made of moisture-absorbing silica gel or any of various polymers. The moisture absorber 25A may be a consumable attached to the front surface 25F in a replaceable manner.

The moisture absorber 25A may also function as a heat insulator. When, for example, the temperature of the environment where the cutting apparatus 10 is installed is low, the cutting apparatus 10 is cooled by outside air. Assuming that the front surface 25F is a portion of the cutting apparatus 10 that comes into direct contact with the outside air, not only the temperature of the front side of the front surface 25F but also the temperature of the rear side of the front surface 25F facing the second housing space A2 decreases. Because the outside air containing moisture comes into contact with the front surface 25F, condensation is likely to occur. Providing the moisture absorber 25A on the front surface 25F (which is a portion of the cutting apparatus 10 that comes into direct contact with the outside air), however, would suitably prevent formation of condensation if the environment temperature is low. Because the moisture absorber 25A is optional, the front lower cover 25 does not necessarily have to be provided with the moisture absorber 25A.

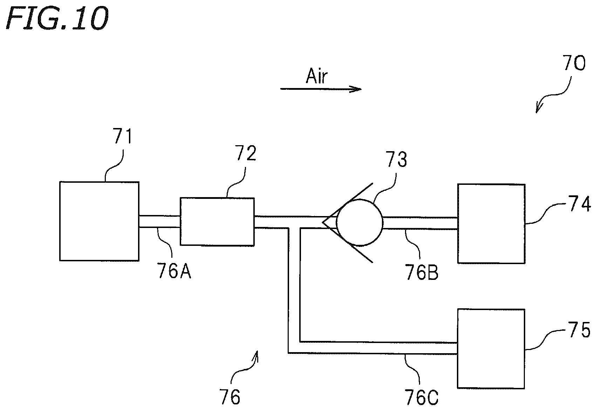

FIG. 10 is a block diagram of the blower 70. The arrow in FIG. 10 indicates the flow of air. The blower 70 blows air from inside the case 11 to the exhaust ports 25E. The blower 70 may be configured to blow about 10 L or more of air per minute. In one example, the blower 70 may blow about 20 L to about 100 L of air per minute. In another example, the blower 70 may blow about 30 L to about 50 L of air per minute. The blower 70 includes an air current generator 71, an air dryer 72, a one way valve 73, the first air nozzle 74, the second air nozzle 75, and an air supply passage 76. The air supply passage 76 is a passage through which air is supplied from the air current generator 71 to the first air nozzle 74 and the second air nozzle 75. The air supply passage 76 is flexible. The air supply passage 76 may be made of any suitable material and may have any suitable shape and size. In one example, the air supply passage 76 is an easily deformable resin tube. In the present embodiment, the air supply passage 76 includes a first air supply passage 76A, a second air supply passage 76B, and a third air supply passage 76C.

The air current generator 71 generates an air flow. The air current generator 71 is, for example, a compressor to supply compressed air. In the present embodiment, the blower 70 includes one air current generator 71. Alternatively, the blower 70 may include two or more air current generators 71. In the present embodiment, the air current generator 71 is disposed outside the case body 12 and connected to the case body 12. Alternatively, the air current generator 71 may be disposed inside the case body 12. The air current generator 71 is electrically connected to the controller 90 and controlled by the controller 90. The air compressed by the air current generator 71 has a pressure of about 0.1 MPa or more. In one example, the air compressed by the air current generator 71 may have a pressure of 0.2 MPa, plus or minus 0.05 MPa. The air current generator 71 is in communication with the air dryer 72 through the first air supply passage 76A. The air compressed by the air current generator 71 is supplied to the air dryer 72.

The air dryer 72 removes moisture from the air (which is compressed by the air current generator 71) using, for example, a dehumidifier. The air dryer 72 may further include, for example, a filter that is able to remove impurities (such as oil and/or dust) from the air. The air dryer 72 may be a pressure regulating valve (i.e., a regulator) including, for example, a dehumidifier. In the present embodiment, the air dryer 72 is disposed outside the case body 12 and connected to the case body 12. Alternatively, the air dryer 72 may be disposed inside the case body 12. The air dryer 72 is in communication with the first air nozzle 74 through the second air supply passage 76B. The air dryer 72 is in communication with the second air nozzle 75 through the third air supply passage 76C. The air dehumidified by the air dryer 72 is supplied to each of the first air nozzle 74 and the second air nozzle 75. Supplying the dehumidified air into the case 11 promotes drying of the inside of the case 11 (in particular, the second housing space A2). Because the air dryer 72 is optional, the blower 70 does not necessarily have to include the air dryer 72. When the blower 70 includes no air dryer 72, the blower 70 may be configured such that the air current generator 71 directly supplies air to the first air nozzle 74 and the second air nozzle 75.

The one way valve 73 allows air to flow from the air current generator 71 to the first air nozzle 74 but prevents air from flowing from the first air nozzle 74 to the air current generator 71. Depending on, for example, the location of the first air nozzle 74, air may flow back from the first air nozzle 74 toward the air current generator 71. For example, when the first air nozzle 74 is close to the liquid discharge nozzles 36, air flowing back from the first air nozzle 74 toward the air current generator 71 may contain moisture discharged from the liquid discharge nozzles 36. Providing the one way valve 73 between the air current generator 71 and the first air nozzle 74, however, enables the blower 70 to suitably blow dried air. Because the one way valve 73 is optional, the blower 70 does not necessarily have to include the one way valve 73.

The first air nozzle 74 is provided on the carriage 38. The first air nozzle 74 is disposed laterally of the liquid discharge nozzles 36. Similarly to the liquid discharge nozzles 36, the first air nozzle 74 moves on the X, Y, and Z orthogonal coordinate system in accordance with the movement of the carriage 38. The first air nozzle 74 includes an outlet 74O disposed in the machining space 19. The outlet 74O is disposed above the clamp 50 and the machining tool 6. The outlet 74O is an opening defined along the Z axis. Specifically, the outlet 74O is an opening facing downward in the up-down direction. In the present embodiment, the quantity of air to be jetted out of the first air nozzle 74 per unit time is about 5 L or more per minute. In one example, the quantity of air to be jetted out of the first air nozzle 74 per unit time may be 10 L to 30 L per minute. The first air nozzle 74 jets out air so as to generate an air current that flows from an upper space to a lower space in the case 11.

The outlet 74O is disposed outward of the liquid discharge nozzles 36 in a radial direction of the spindle 30. The outlet 74O has a ring shape extending along a circle drawn around the rotation axis of the rotator 34 of the spindle 30. In the present embodiment, the outlet 74O surrounds the outlets of the four liquid discharge nozzles 36 (i.e., the outlets of the front, rear, right, and left liquid discharge nozzles 36). In the present embodiment, the first air nozzle 74 is provided with one outlet 74O. As indicated by the arrows in FIG. 2, the first air nozzle 74 jets out air from the outlet 74O during, for example, discharge of the coolant from the liquid discharge nozzles 36. This creates a zonal air curtain around the liquid discharge nozzles 36. Creating the air curtain around the liquid discharge nozzles 36 prevents the coolant from scattering around. The liquid discharge nozzles 36 are thus able to efficiently discharge the coolant onto the machining tool 6 and/or the workpiece(s) 5.

The second air nozzle 75 is secured to the second rear partition 28 of the case body 12. The use of the second air nozzle 75 makes it possible to effectively generate an air current that flows to the exhaust ports 25E in the case 11 without taking up much space. The second air nozzle 75 includes an outlet 75O disposed in the second housing space A2. The outlet 75O is disposed laterally of the storage tank 37. In the present embodiment, the quantity of air to be jetted out of the second air nozzle 75 per unit time is about 1 L or more per minute. In one example, the quantity of air to be jetted out of the second air nozzle 75 per unit time may be 5 L to 20 L per minute. In the present embodiment, the quantity of air to be jetted out of the second air nozzle 75 per unit time is smaller than the quantity of air to be jetted out of the first air nozzle 74 per unit time. Alternatively, the quantity of air to be jetted out of the second air nozzle 75 per unit time may be equal to or larger than the quantity of air to be jetted out of the first air nozzle 74 per unit time.

The outlet 75O is disposed in the rear lower left corner of the second housing space A2. The outlet 75O of the second air nozzle 75 is an opening facing forward. The second air nozzle 75 jets out air from the outlet 75O so as to generate an air current flowing from the rear of the second housing space A2 to the front of the second housing space A2. The air current generated by the second air nozzle 75 flows along an imaginary line 75A (see FIG. 3). The imaginary line 75A extends from the rear of the second housing space A2 to the front of the second housing space A2 along the left wall 14. A component that hinders the flow of air (e.g., the storage tank 37) is not disposed on the imaginary line 75A. The air current generated by the second air nozzle 75 passes through a straight path defined between the left side of the storage tank 37 and the right side of the left wall 14, flows to the front surface 25F of the front lower cover 25, and is then discharged through the exhaust ports 25E.

In one example, the controller 90 is a computer. The controller 90 may include, for example, a central processing unit (CPU), a read-only memory (ROM), a random-access memory (RAM), and a storage medium (such as a memory). The CPU executes a command of a control program. The ROM stores, for example, the program to be executed by the CPU. The RAM is used as a working area where the program is to be expanded. The storage medium stores, for example, various data. The controller 90 may be programmed and configured to control cutting-related operations using, for example, the program stored in the ROM. In the present embodiment, the controller 90 is disposed in the rear portion of the case body 12. Alternatively, a portion or an entirety of the controller 90 may be disposed outside the case body 12.

The user disposes the workpiece 5 and the machining tool 6 at predetermined positions in the machining space 19 so as to cut the workpiece 5 using the cutting apparatus 10. The user moves the front upper cover 20 downward so as to cover the opening 180. The machining space 19 is thus sealed off and separated from the external space. The user disposes the storage tank 37 (which stores the coolant) in the second housing space A2. The user then slides the front lower cover 25 rearward such that the storage tank 37 is unremovable from the second housing space A2 during cutting.

The controller 90 controls the cutting apparatus 10 so as to cut the workpiece 5 in accordance with cutting data. Specifically, the controller 90 controls, for example, the first driver for the first carriage 38A, the second driver for the second carriage 38B, the third driver for the conveyor 58, the first motor for the spindle 30, the second motor for the clamp 50, the liquid discharge nozzles 36, and the air current generator 71 of the blower 70. Accordingly, the controller 90 controls the cutting apparatus 10 so as to cut the workpiece 5 while three-dimensionally changing the relative positions of the workpiece 5 retained by the clamp 50 and the machining tool 6 gripped by the gripper 32. The controller 90 causes the liquid discharge nozzles 36 to discharge the coolant when necessary. The controller 90 causes the first air nozzle 74 to jet out air from the outlet 74O when necessary, and causes the second air nozzle 75 to jet out air from the outlet 75O when necessary.

Jetting out air from the outlet 74O of the first air nozzle 74 generates an air current that flows from the upper space to the lower space in the case 11 (i.e., an air current that flows from the machining space 19 to the second housing space A2). The air inside the machining space 19 thus efficiently moves to the second housing space A2, making it difficult for the air to stagnate in the case 11. Jetting out air from the outlet 75O of the second air nozzle 75 generates an air current that flows from the rear of the second housing space A2 to the front of the second housing space A2 (i.e., an air current that flows from a region adjacent to the second rear partition 28 to a region adjacent to the front surface 25F of the front lower cover 25). The front surface 25F of the front lower cover 25 is inclined toward the exhaust ports 25E. The air current guided close to the front surface 25F is thus led into the exhaust ports 25E along the front surface 25F. Consequently, the air inside the second housing space A2 efficiently moves to the exhaust ports 25E, making it difficult for the air to stagnate in the second housing space A2.

As described above, the case 11 of the cutting apparatus 10 according to the present embodiment is provided with the exhaust ports 25E through which the second housing space A2 is in communication with the external space. The blower 70 generates an air current flowing to the exhaust ports 25E. Such an air current increases air permeability of the inside of the case 11 (in particular, the second housing space A2). This makes it difficult for moisture-containing air to stagnate in the second housing space A2 and thus prevents or reduces formation of condensation. Accordingly, the present embodiment makes it difficult for the inside of the second housing space A2 to be wetted by condensate, and makes it unlikely that the tool(s) housed in the housing case 80 inside the second housing space A2 will be affected by condensation. The present embodiment also makes it difficult for an area adjacent to the cutting apparatus 10 to be wetted by condensate, so that the cutting apparatus 10 will be kept in a clean state. In addition, the present embodiment saves the time and trouble of removing condensate, resulting in enhanced user convenience. The present embodiment further has the effect of dissipating heat inside the case 11 by increasing the air permeability of the case 11 when, for example, the controller 90 generates heat.

The outlet 75O of the blower 70 of the cutting apparatus 10 according to the present embodiment is disposed in the second housing space A2. Thus, moisture-containing air is more unlikely to stagnate in the second housing space A2 than when, for example, no outlet 75O is disposed in the second housing space A2. Consequently, the present embodiment more successfully prevents or reduces formation of condensation in the second housing space A2.

The case 11 of the cutting apparatus 10 according to the present embodiment includes the front surface 25F inclined toward the exhaust ports 25E. Air guided close to the front surface 25F is led into the exhaust ports 25E along the front surface 25F. This effectively discharges the air through the exhaust ports 25E, making it more difficult for the air to stagnate in the second housing space A2. Consequently, the present embodiment more successfully prevents or reduces formation of condensation in the second housing space A2.

The outlet 75O of the blower 70 of the cutting apparatus 10 according to the present embodiment is an opening facing toward the front surface 25F. The air inside the second housing space A2 is thus effectively guided close to the front surface 25F. This makes it more difficult for the air to stagnate in the second housing space A2. Consequently, the present embodiment more successfully prevents or reduces formation of condensation in the second housing space A2.

The cutting apparatus 10 according to the present embodiment includes the moisture absorber 25A that intersects the imaginary line 75A along which the air current blown from the outlet 75O flows. The present embodiment would thus more successfully prevent or reduce formation of condensation if turbulence occurs in the second housing space A2 and/or the air current stagnates in the second housing space A2.

The blower 70 of the cutting apparatus 10 according to the present embodiment includes the first air nozzle 74 that jets out air from the outlet 74O, and the second air nozzle 75 that jets out air from the outlet 75O. Providing the first air nozzle 74 and the second air nozzle 75 would increase the velocity of air current flow if the quantity of air is relatively small or air pressure is relatively low. The first air nozzle 74 and the second air nozzle 75 each adjust the flow of air current so as to facilitate the flow of air current in a desired direction.

The outlet 74O of the blower 70 of the cutting apparatus 10 according to the present embodiment is disposed in the machining space 19. This effectively guides air from the machining space 19 to the second housing space A2. Thus, moisture-containing air is more unlikely to stagnate in the machining space 19 than when, for example, no outlet 74O is disposed in the machining space 19. Consequently, the present embodiment more successfully prevents or reduces formation of condensation in the second housing space A2.

The cutting apparatus 10 according to the present embodiment is configured such that the second housing space A2 is disposed below the machining space 19, and the outlet 74O disposed in the machining space 19 is an opening facing downward. The outlet 74O (which is the opening facing downward) facilitates movement of moisture-containing air from inside the machining space 19 to the second housing space A2. Consequently, such a configuration is particularly advantageous in applying the techniques disclosed herein.

The front surface of the case 11 (i.e., the front surface 25F of the front lower cover 25) of the cutting apparatus 10 according to the present embodiment is inclined such that the lower end of the front surface of the case 11 is located forward of the upper end of the front surface of the case 11. The bottom surface of the case 11 (i.e., the bottom surface 25B of the front lower cover 25) is inclined such that the upper end of the bottom surface 25B is located forward of the lower end of the bottom surface 25B. The exhaust ports 25E are disposed in the bottom surface 25B. Depending on, for example, the location where the cutting apparatus 10 is installed, the exhaust ports 25E may be closed when the exhaust ports 25E are disposed in the side wall(s) of the case 11 (e.g., the left wall 14 and/or the right wall 15). Providing the exhaust ports 25E in the bottom surface 25B (which is inclined such that the upper end of the bottom surface 25B is located forward of the lower end of the bottom surface 25B) would make it unlikely that the exhaust ports 25E will be closed if the cutting apparatus 10 is disposed, for example, in a narrow space by the user. Consequently, the present embodiment more reliably achieves the effects of the techniques disclosed herein.

Although the preferred embodiment of the present invention has been described thus far, the foregoing embodiment is only illustrative, and the present invention may be embodied in various other forms. The present invention may be practiced based on the disclosure of this specification and technical common knowledge in the related field. The techniques described in the claims include various changes and modifications made to the embodiment illustrated above. Any or some of the technical features of the foregoing embodiment may be replaced with any or some of the technical features of modified embodiments described below. Any or some of the technical features of the modified embodiments described below may be added to the technical features of the foregoing embodiment. Any or some of the technical features of the foregoing embodiment may be appropriately combined with any or some of the technical features of the modified embodiments described below. Unless described as being essential, the technical features may be optional.

In the foregoing embodiment, the blower 70 includes the air current generator 71, the first air nozzle 74, and the second air nozzle 75. The blower 70, however, does not necessarily have to include the air current generator 71, the first air nozzle 74, and the second air nozzle 75. In one example, the blower 70 may include either one of the first air nozzle 74 and the second air nozzle 75. In another example, the blower 70 may include a fan instead of or in addition to the air current generator 71, and may include fan(s) instead of or in addition to the first air nozzle 74 and/or the second air nozzle 75. Each fan may include, for example, blade(s) and a motor that is connected to the controller 90. Each fan may be configured such that the motor rotates the blade(s) so as to generate an air current flowing from inside the case 11 to the exhaust ports 25E. Each fan may be, for example, a multi-blade fan (such as a sirocco fan), a turbo fan, a propeller fan, or any other suitable fan.

The passage between the air current generator 71 and the first air nozzle 74 (e.g., the second air supply passage 76B), and/or the passage between the air current generator 71 and the second air nozzle 75 (e.g., the third air supply passage 76C) may be provided with, for example, valve(s) connected to the controller 90. The valve(s) may be, for example, magnetic valve(s) and/or switching valve(s). The controller 90 controls opening and closing of the magnetic valve(s) and/or switching of the switching valve(s). The valve(s) may be configured to allow selection between the second air supply passage 76B and the third air supply passage 76C.

In the foregoing embodiment, the carriage 38 is provided with one first air nozzle 74. Alternatively, the carriage 38 may be provided with any other number of first air nozzles 74, and the first air nozzles 74 may have any suitable shapes and may be disposed at any suitable locations. In one example, the number of first air nozzles 74 may be two or four. The first air nozzle(s) 74 may be directly or indirectly secured to, for example, wall surface(s) of the case body 12 that define(s) the machining space 19. Specifically, the first air nozzle(s) 74 may be directly or indirectly secured to one or more of the left wall 14, the right partition 15S, the upper partition 17S, the first rear partition 16S, and the front upper cover 20. The outlet(s) 74O of the first air nozzle(s) 74 may be disposed forward and rearward of the liquid discharge nozzles 36 or may be disposed rightward and leftward of the liquid discharge nozzles 36.

In the foregoing embodiment, the single second air nozzle 75 is secured to the second rear partition 28 of the case body 12, and the outlet 75O is disposed in the rear lower left corner of the second housing space A2. Alternatively, the blower 70 may be provided with any other number of second air nozzles 75, and the second air nozzles 75 may be disposed at any suitable locations. In other words, the number of second air nozzles 75 may be two or more. The second air nozzle(s) 75 may be directly or indirectly secured to, for example, wall surface(s) of the case body 12 that define(s) the second housing space A2. Specifically, the second air nozzle(s) 75 may be directly or indirectly secured to one or more of the left wall 14, the right wall 15, the second bottom partition 27, and the front lower cover 25. The second air nozzle(s) 75 may be disposed, for example, between the right side of the storage tank 37 and the left side of the right wall 15. The outlet(s) 75O of the second air nozzle(s) 75 may be disposed, for example, in the rear upper left corner, the rear lower right corner, and/or the rear upper right corner of the second housing space A2.

The controller 90 may include not only a main controller to control the cutting apparatus 10 so as to cut the workpiece(s) 5 as described above but also a deactivation controller to be driven after cutting is finished. The deactivation controller is driven after the main controller has finished controlling the cutting apparatus 10. In one example, the deactivation controller is driven so as to turn off the power of the cutting apparatus 10. The deactivation controller may be configured to, upon receiving, for example, a command to turn off the power of the cutting apparatus 10 from the user, run the air current generator 71 of the blower 70 in an idling mode for a set period of time, cause the first air nozzle 74 and/or the second air nozzle 75 to jet out air for a predetermined period of time, and then deactivate the air current generator 71.

## Claims

1. A cutting apparatus (10) comprising:
a case (11) provided with
a machining space (19),
a housing space (A2),
a communication port (27H) through which the machining space (19) is in communication with the housing space (A2), and
an exhaust port (25E) through which the housing space (A2) is in communication with an external space;
a retainer (50) disposed in the machining space (19), the retainer (50) being configured to retain a workpiece (5);
a gripper (32) disposed in the machining space (19), the gripper (32) being configured to grip a machining tool (6) to cut the workpiece (5);
a liquid discharger (36) to discharge a coolant into the machining space (19);
a storage tank (37) disposed in the housing space (A2), the storage tank (37) being configured to collect the coolant discharged from the liquid discharger (36) and passed through the communication port (27H); and
a blower (70) including at least one of a first outlet (74O) and a second outlet (75O), the blower (70) being configured to blow air from the at least one of the first and second outlets (74O, 75O) such that the air flows from inside the case (11) to the exhaust port (25E).

2. The cutting apparatus (10) according to claim 1, wherein
the second outlet (75O) of the blower (70) is disposed in the housing space (A2).

3. The cutting apparatus (10) according to claim 1 or 2, wherein
the case (11) includes an inclined surface (25F) inclined toward the exhaust port (25E).

4. The cutting apparatus (10) according to claim 3, wherein
the second outlet (75O) of the blower (70) is an opening facing toward the inclined surface (25F).

5. The cutting apparatus (10) according to any one of claims 1 to 4, further comprising a moisture absorber (25A), wherein
the moisture absorber (25A) intersects an imaginary line (75A) along which an air current blown from the second outlet (75O) flows.

6. The cutting apparatus (10) according to any one of claims 1 to 5, wherein
the blower (70) includes at least one of a first air nozzle (74) and a second air nozzle (75), and
the at least one of the first and second air nozzles (74, 75) is configured to jet out air from the at least one of the first and second outlets (74O, 75O).

7. The cutting apparatus (10) according to any one of claims 1 to 6, wherein
the first outlet (74O) of the blower (70) is disposed in the machining space (19).

8. The cutting apparatus (10) according to claim 7, wherein
the housing space (A2) is disposed below the machining space (19), and
the first outlet (74O) disposed in the machining space (19) is an opening facing downward.

9. The cutting apparatus (10) according to any one of claims 1 to 8, wherein
the case (11) includes a front surface (25F) and a bottom surface (25B),
the front surface (25F) is inclined such that a lower end of the front surface (25F) is located forward of an upper end of the front surface (25F),
the bottom surface (25B) is inclined such that an upper end of the bottom surface (25B) is located forward of a lower end of the bottom surface (25B), and
the exhaust port (25E) is disposed in the bottom surface (25B).
